# FASCICULE DE BREVET EUROPEEN

(11) **EP 0 557 160 B1**
(45) Date de publication et mention de la délivrance du brevet: **01.10.1997**
(21) Numéro de dépôt: 93400327.8
(22) Date de dépôt: 09.02.1993
(51) Int. Cl.: G01S 7/292

(54) **Procédé et dispositif d'élimination d'échos fixes reçus par des radars**
Verfahren und Vorrichtung zur Unterdrückung der von Radargeräten empfangenen Festechos
Method and device for elimination of stationary echoes received by radars

(30) Priorité: 18.02.1992 FR 9201809
(43) Date de publication de la demande: 25.08.1993
(73) Titulaire: THOMSON-CSF, 75008 Paris (FR)
(72) Inventeur: Boulanger, Alain, F-92402 Courbevoie Cedex (FR); Garrec, Patrick, F-92402 Courbevoie Cedex (FR)
(74) Mandataire: Benoit, Monique

(56) Documents cités:
- EP-A- 0 147 305
- INTERNATIONAL CONFERENCE RADAR-82 Octobre 1982, London, UK, pp 491-495; JOHN S. BIRD: 'Ground Clutter Suppression using a Coherent Clutter Map'
- PATENT ABSTRACTS OF JAPAN vol. 14, no. 104 (P-1013) 26 Février 1990 & JP-A-13 07 682

## Description

La présente invention concerne un procédé et un dispositif d'élimination d'échos fixes reçus par des radars. Elle s'applique notamment à l'élimination d'échos fixes reçus par des radars dits cohérents, fonctionnant par émission de rafales ou trains d'impulsions, avec ou sans compression de ces dernières.

Les radars cohérents sont des radars où il existe une relation de phase entre le signal émis et le signal reçu. Cette relation permet de localiser les cibles renvoyant des échos reçus par ces radars. Cependant, dans certains cas, celle-ci ne permet pas de distinguer certaines cibles entre elles, en particulier des cibles mobiles de cibles fixes. C'est le cas par exemple, quand la trajectoire d'un avion évolue près d'un massif montagneux. L'avion renvoie au radar des échos mobiles alors que le massif renvoie des échos fixes. Dans l'exemple cité, ces derniers sont généralement saturants, c'est-à-dire qu'ils saturent la chaîne de détection du radar et empêchent la perception par celui-ci des échos mobiles, donc la détection de l'avion passant près de la montagne.

Il existe des solutions, notamment des systèmes à gain variable dans le temps connus de l'homme de l'art, permettant d'éliminer ces échos fixes. Mais ceux-ci s'appliquent difficilement aux radars à compression d'impulsions. En effet, dans ces radars, le système à gain variable dans le temps provoque des remontées de lobes secondaires liées aux produits de convolution et à la multiplication par une rampe des signaux reçus. Les signaux captés par ces lobes secondaires perturbent le signal utile capté par le lobe principal de l'antenne. Par ailleurs, les circuits de mise en oeuvre sont généralement complexes et les systèmes à gain variable dans le temps atténuent dans le même rapport les échos fixes et les échos mobiles, ce qui devient très pénalisant quand les échos fixes atteignent une amplitude non négligeable par rapport aux échos mobiles. Enfin les traitements d'élimination d'échos fixes selon l'art antérieur sont généralement conçus entièrement en techniques numériques et sont donc implantés après codage numérique des signaux reçus. La conversion analogique-numérique de ces signaux limite la dynamique de leur amplitude et ne permet pas en toutes occasions de distinguer les échos mobiles des échos fixes.

Une demande de brevet européen EP-A-0 147 305 présente un procédé d'élimination d'échos fixes contenus dans un train d'impulsions par soustraction à un écho reçu de l'écho correspondant retardé d'une période de répétition.

Le but de l'invention est de pallier les inconvénients précités, notamment en simplifiant les circuits d'élimination des échos fixes et en les plaçant en amont des codeurs.

A cet effet, l'invention a pour objet un procédé d'élimination d'échos fixes selon la revendication 1.

L'invention a également pour objet un dispositif pour la mise en oeuvre du procédé précité.

L'invention a pour principaux avantages qu'elle permet d'atténuer les échos fixes sans atténuer les échos mobiles, qu'elle améliore la dynamique de puissance des radars, qu'elle n'entraîne pas de perturbations des signaux utiles captés par le lobe principal des antennes, enfin au'elle n'ajoute pas de phénomènes d'instabilité.

D'autres caractéristiques et avantages de l'invention apparaîtront à l'aide de la description qui suit faite en regard des dessins annexés qui représentent:
- la figure 1a, un train d'impulsions reçues ;
- la figure 1b, des échantillonnages d'une première impulsion ;
- la figure 2, les lieux géométriques des vecteurs représentant les impulsions reçues dans un diagramme de Fresnel ;
- la figure 3a, les lieux géométriques des vecteurs précédents dans un nouveau système d'axes ;
- les figures 3b et 3c, des courbes d'échos fixes et d'échos mobiles ;
- la figure 4, un synoptique d'un mode de réalisation possible pour la mise en oeuvre du procédé selon l'invention.

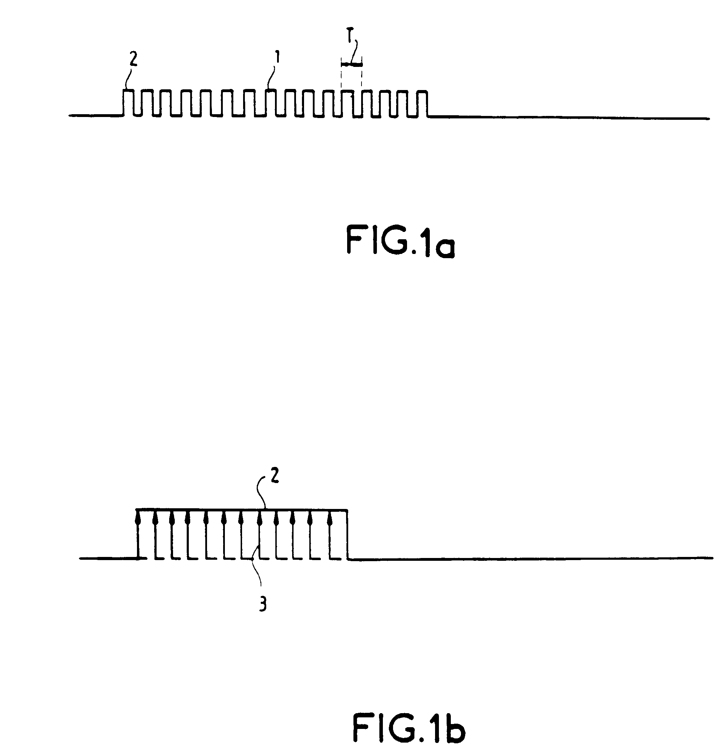

La figure 1a illustre un train 1 d'impulsions reçues par un radar suivant par exemple une période de répétition T. Ce train d'impulsions reçues représente un écho car il est généré à partir d'un train d'impulsions émises par le radar et renvoyées par une cible. Si la cible est mobile, l'effet Doppler fait tourner la phase des impulsions reçues par rapport à celle des impulsions émises. Un traitement, comprenant notamment un calcul de transformée de Fourier rapide, est effectué sur ces signaux. En pratique, le train d'impulsions reçues représente un écho mobile renvoyé par une cible mobile, et un écho fixe renvoyé par une cible fixe ou plus généralement par un domaine fixe. L'écho fixe contenu dans ces impulsions augmente notamment l'amplitude de ces dernières, ce qui a pour effet de saturer les circuits de réception du radar, des codeurs par exemple, uniquement dimensionnés pour des signaux utiles correspondant aux échos mobiles.

Pour éliminer les échos fixes, le procédé selon l'invention consiste dans une première étape à mémoriser la première impulsion 2 de chaque train 1 d'impulsions reçues, en mémorisant son amplitude et sa phase par exemple, puis dans une deuxième étape, après reconstitution par exemple de la première impulsion 2 à partir de son amplitude et phase mémorisées, à soustraire la première impulsion 2 aux autres impulsions du train 1 d'impulsions reçues.

La figure 1b illustre un principe possible de détection de la phase et de l'amplitude de la première impulsion 2. Dans ce cas, cette première impulsion 2 peut par exemple être échantillonnée. Les flèches 3 symbolisent les échantillonnages à l'intérieur de la première impulsion 2. La période d'échantillonnage peut être par exemple égale à 100 ns environ. Compte tenu des largeurs d'impulsions en jeu, supérieures au moins à 1 µs environ, cela crée un taux d'échantillonnage important qui apporte une bonne précision de la définition de l'amplitude et de la phase.

La phase et l'amplitude dues aux échos fixes varient très peu d'une impulsion à l'autre, elles peuvent donc être considérées comme constantes pour toutes les impulsions du train 1. En revanche, il n'en est pas de même pour les échos mobiles qui modifient la phase d'une impulsion à l'autre.

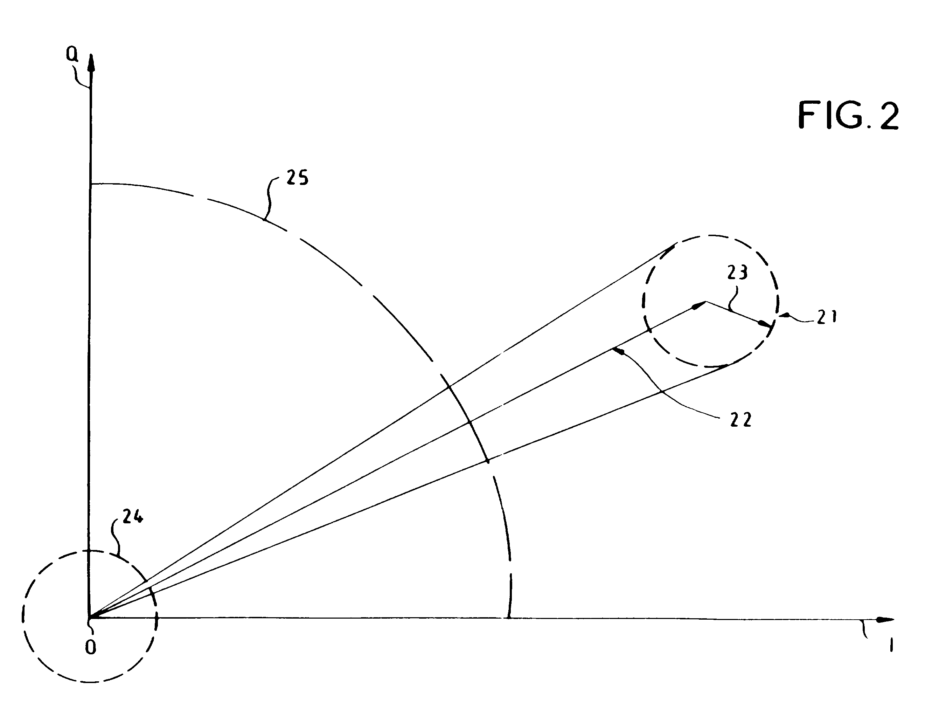

Ce résultat permet d'obtenir le diagramme de Fresnel de la figure 2 qui explicite le procédé selon l'invention. Ce diagramme représente des lieux géométriques définissant des extrémités de vecteurs, images des impulsions reçues par le radar, ces impulsions étant par exemple celles du train 1. Ces lieux géométriques sont définis dans un plan suivant deux axes I, Q. Les impulsions étant notées selon la notation complexe, l'axe I repère leur partie réelle et l'axe Q leur partie imaginaire. Dans un tel diagramme, l'amplitude d'un signal est caractérisée par le module d'un vecteur et sa phase par l'angle de ce vecteur avec l'axe I.

Sur la figure 2, le cercle 21 représente par exemple le lieu géométrique correspondant à des impulsions reçues, celles par exemple du train 1. Chaque impulsion est composée de la somme d'un écho fixe représenté par un premier vecteur 22 et d'un écho mobile représenté par un deuxième vecteur 23. Toutes les impulsions ont en commun l'écho fixe et sont généralement constituées d'un écho mobile ayant la même amplitude d'une impulsion à l'autre. Seule la phase est modifiée par l'effet Doppler. Il en résulte donc que tous les vecteurs représentatifs des impulsions du train 1 sont constitués par la somme du premier vecteur 22 et d'un deuxième vecteur 23 ayant son origine au centre du cercle 21 et dont l'extrémité décrit le cercle 21, le rayon de ce cercle représentant l'amplitude de l'écho mobile. Un quart de cercle 25 délimite la zone de saturation des circuits de réception du radar, c'est-à-dire que ce quart de cercle 25 délimite l'amplitude des signaux au delà de laquelle ceux-ci saturent les circuits de réception. La figure 2 présente un exemple où le train 1 d'impulsions sature ces circuits puisque le lieu géométrique de ces impulsions est au delà du quart de cercle 25. L'amplitude et la phase de l'écho fixe ayant été par exemple mémorisées dans une première étape, le procédé selon l'invention consiste dans une deuxième étape à retrancher cet écho fixe aux impulsions reçues. Cet écho fixe pouvant être considéré comme constant et représenté par le premier vecteur par exemple, la deuxième étape du procédé selon l'invention revient à retrancher ce premier vecteur 22 aux vecteurs représentant les impulsions reçues et dont les extrémités décrivent le cercle 21. Les nouvelles impulsions, affranchies de l'écho fixe sont alors représentées dans le diagramme de Fresnel de la figure 2 par des vecteurs dont les extrémités décrivent un nouveau cercle 24 centré à l'origine O du diagramme. Les impulsions résultantes sont alors à l'extérieur de la zone de saturation et peuvent être traitées convenablement par les circuits de réception et de traitement du radar.

En fait, avec l'application du procédé selon l'invention, le nouveau cercle 24 n'est pas exactement centré à l'origine. En effet, l'amplitude et la phase de l'écho fixe sont mémorisées dans la première impulsion 2 du train 1 d'impulsion. Or celle-ci contient par ailleurs l'amplitude et la phase de l'écho mobile. C'est donc un vecteur représentant la somme de ces deux échos qui est retranché aux autres impulsions du train 1. Cependant cela n'altère pas l'efficacité du procédé selon l'invention. Cela est dû au fait que l'amplitude 23 de l'écho mobile est faible devant l'amplitude 22 de l'écho fixe. En conséquence, le centre du nouveau cercle 24 reste proche de l'origine O et dans tous les cas reste en dehors de la zone de saturation délimitée par le quart de cercle 25. Ce résultat est au moins toujours vrai quand l'écho fixe est saturant. Le procédé selon l'invention peut néanmoins être appliqué quand les échos fixes ne saturent pas les circuits de réception.

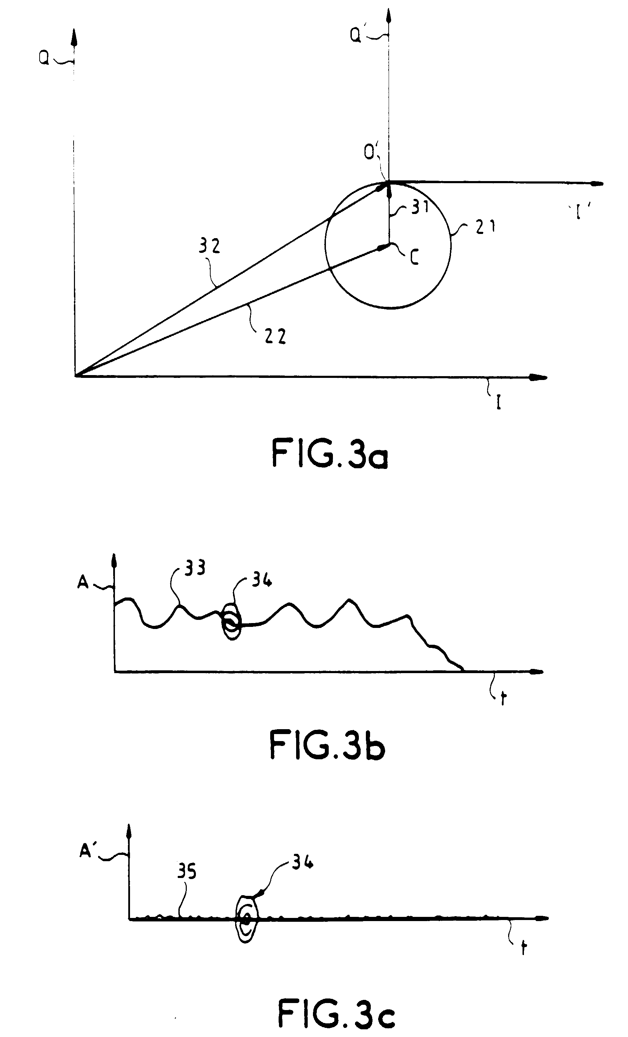

La figure 3a illustre l'influence de l'écho mobile présent dans la première impulsion 2 pour le positionnement du nouveau cercle précité, lieu géométrique des impulsions, diminuées de l'écho fixe et de l'écho mobile de la première impulsion. La figure 3a représente toujours un diagramme de Fresnel. Le premier vecteur 22 représentant l'écho fixe est toujours repéré suivant les axes I, Q. Un vecteur 31 représentant l'écho mobile présent dans la première impulsion s'ajoute au premier vecteur 22 pour donner un troisième vecteur 32 représentant la somme de l'écho fixe et de l'écho mobile constituant la première impulsion 2. Cette impulsion 2 étant retranchée à toutes les impulsions suivantes du train 1, c'est ce troisième vecteur 32 qu'il faut retrancher de tous les autres vecteurs représentant les impulsions suivantes et dont les extrémités décrivent le cercle 21. Cette opération de soustraction du troisième vecteur 32 revient à effectuer un changement de système d'axes de référence. De nouveaux axes I', Q' sont obtenus à partir des anciens axes I, Q par une translation de longueur et de direction égale au troisième vecteur 32. Les vecteurs représentant les nouvelles impulsions sont donc repérés par rapport aux axes I'et Q', leurs origines étant le point d'origine O' des axes I', Q' et leurs extrémités étant le cercle 21. Le centre C de ce cercle 21 ne se confond pas avec l'origine O'. La différence entre ces deux points C et O' est définie par le vecteur 31 et représente l'écho mobile présent dans la première impulsion. La position de ce vecteur 31 dans la figure 3a a été donnée à titre d'exemple, mais celle-ci peut décrire le cercle 21 de façon quelconque.

La figure 3b montre dans un système d'axes A, t où A indique les amplitudes et t les temps, la courbe 33 représentant l'amplitude en fonction du temps de l'écho fixe à laquelle se superpose la courbe 34 représentant l'écho mobile présent dans la première impulsion 2 du train 1.

La figure 3c montre dans un système d'axes A', t correspondant au nouveau système d'axes I', Q' de la figure 3a la nouvelle courbe 35 représentant l'amplitude en fonction du temps de l'écho fixe. Aux légères variations d'écho fixe d'une impulsion à l'autre et à un bruit résiduel près, cette courbe est quasi nulle. A celle-ci se superpose toujours la courbe 34 de l'écho mobile de la première impulsion représentant en fait un écho fixe résiduel. Celui-ci est présent dans chacune des impulsions suivant la première. Néanmoins, sa faible amplitude, comme l'a déjà démontré le diagramme de Fresnel n'apporte pas de perturbations.

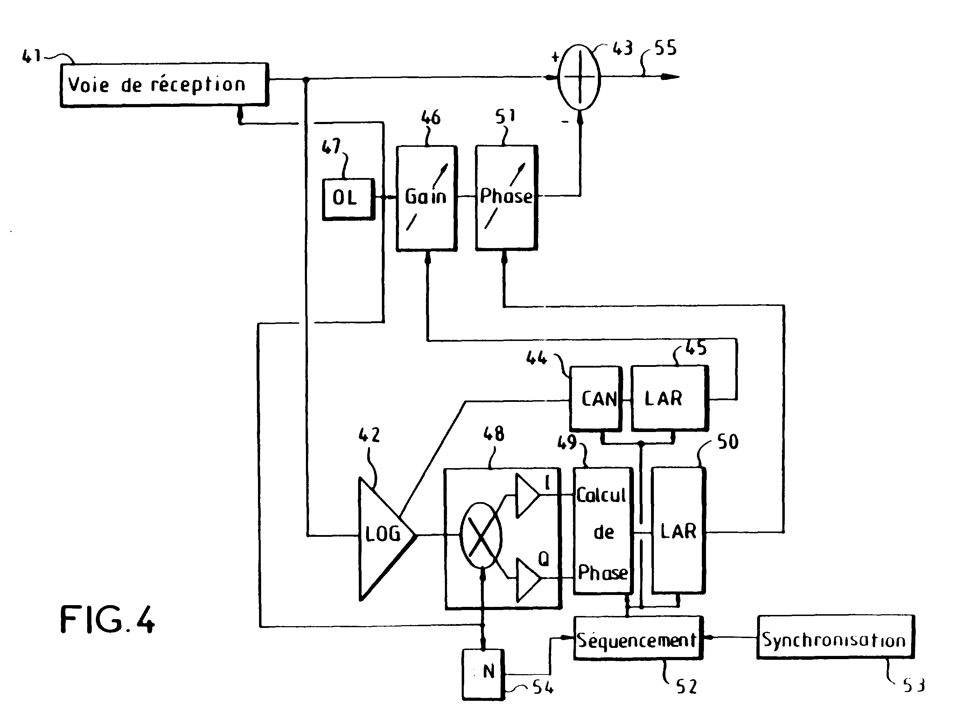

La figure 4 présente le synoptique d'un mode de réalisation possible pour la mise en oeuvre du procédé selon l'invention. Les échos traités, somme d'un écho fixe et d'un écho mobile, constituant le train 1 d'impulsions sont reçus dans une voie de réception 41 d'un radar.

La fréquence des signaux en sortie de la voie de réception 41 est par exemple transposée dans la bande de fréquences dite intermédiaire, autour de 60 MHz par exemple, la fréquence intermédiaire étant fournie à la voie de réception par un oscillateur local non représenté. La voie de réception 41 est reliée à l'entrée d'un détecteur 42 d'amplitude et de phase, un détecteur amplificateur logarithmique par exemple, et à l'entrée positive d'un additionneur 43. Une sortie du détecteur 42 est reliée à l'entrée analogique d'un convertisseur analogique-numérique 44, ce dernier servant par exemple à coder l'amplitude des échantillons de la première impulsion. Sa sortie est reliée par exemple à l'entrée d'une première ligne à retard numérique 45, celle-ci ayant pour fonction de mémoriser l'amplitude convertie par le convertisseur 44. L'utilisation d'un détecteur amplificateur logarithmique permet notamment de réduire le nombre de bits nécessaires au codage de l'amplitude, et d'utiliser par exemple un codeur à 8 bits. La sortie de la ligne à retard 45 est reliée à l'entrée de commande d'un atténuateur programmable 46. Celui-ci reçoit en entrée un signal délivré par un oscillateur local 47 à la fréquence intermédiaire des signaux de sortie de la voie de réception 41. Son gain est programmé par le code présenté à son entrée par la ligne à retard 45 de façon à ce qu'il présente en sortie des signaux d'amplitudes égales à celles mémorisées par le convertisseur 44 et la ligne à retard 45.

De même, l'autre sortie du détecteur 42 est reliée à une entrée d'un circuit 48 de discrimination d'amplitude et de phase, constitué par exemple d'un mélangeur suivi de deux déphaseurs décalés en phase de 90°. Le circuit 48 de discrimination est relié à une sortie de l'oscillateur local 47 qui lui fournit une référence de phase. Un circuit de calcul de phase 49 est couplé aux sorties du circuit 48 de discrimination, une sortie fournissant par exemple la partie réelle du signal détecté et l'autre sortie fournissant la partie imaginaire du signal, en quadrature avec la précédente. La sortie du circuit de calcul de phase 49 est reliée à l'entrée d'une deuxième ligne à retard numérique 50, celle-ci ayant pour fonction de mémoriser la phase détectée à l'entrée du détecteur 42. Les lignes à retard numériques 45 et 50 pourraient par exemple être remplacées par tous types de mémoires numériques. La sortie de la deuxième ligne à retard 50 est reliée à l'entrée de commande d'un déphaseur programmable 51. Celui-ci a une entrée couplée à la sortie de l'atténuateur programmable 46 et agit sur la phase de son signal entrant, en fonction du code établi par la sortie de la deuxième ligne à retard 50 de façon à ce que cette phase soit opposée à celle mémorisée par cette dernière. La sortie du déphaseur programmable est reliée à l'entrée négative de l'additionneur 43. La sortie d'un circuit de séquencement 52 est couplée d'une part au convertisseur analogique-numérique 44 et à la première ligne à retard 45 et d'autre part au circuit de calcul de phase 49 et à la deuxième ligne à retard 50. Une première entrée du circuit de séquencement 52 est reliée à la sortie d'un circuit de synchronisation 53 ; celui-ci permet au circuit de séquencement 52 de commander par exemple la conversion numérique d'amplitude et le calcul de phase lors de la première impulsion reçue. Cette synchronisation est donc fonction des récurrences d'émission et de réception du radar. Le circuit de synchronisation est donc par exemple couplé à des circuits de commande du radar. Une deuxième entrée du circuit de séquencement 52 est reliée à la sortie d'un diviseur 54 dont l'entrée est reliée à la sortie de l'oscillateur local 47. Ce diviseur peut par exemple diviser la fréquence entrante par 6, 12ou toute autre valeur et permettre au circuit de séquencement 52 de commander le convertisseur analogique-numérique 44 et le circuit de calcul de phase 44 de façon à ce qu'ils échantillonnent plusieurs valeurs d'amplitude et de phase dans la première impulsion, 6 ou 12 valeurs de l'une et l'autre par exemple. Cet échantillonnage surabondant peut être effectué notamment pour éviter des raies parasites liées au codage.

La sortie 55 de l'additionneur 43 est reliée à la suite de la chaîne de réception qui comprend notamment des filtres adaptés et des codeurs. Les impulsions en sortie 55 de l'additionneur 43 sont le résultat de la soustraction de la première impulsion mémorisée sur les autres impulsions du train d'impulsions. L'additionneur 43 est un circuit analogique, il peut fonctionner en permanence. Néanmoins, les signaux qui lui sont présentés à son entrée négative délivrés par les atténuateurs 46, 51 sont présentés à l'arrivée de toute nouvelle impulsion du train 1 reçu. Les signaux reproduisent les échantillons successifs mémorisés au cours de la première impulsion par les lignes à retard numérique.

Dans ce cas d'application du procédé selon l'invention, chaque échantillon de la première impulsion 2 est soustrait aux autres impulsions du train 1 à des instants successifs séparés de la période de répétition T des impulsions à l'intérieur du train 1, le premier instant étant l'instant d'échantillonnage à l'intérieur de la première impulsion augmenté de cette période de répétition T.

L'écho fixe, à un écho mobile près, est mémorisé par la première impulsion du train d'impulsions reçues. Néanmoins, il est possible par exemple d'intégrer les signaux du train d'impulsions précédent et de réaliser la mémorisation de l'écho fixe par cette intégration. Cela permet notamment d'intégrer tous les échos mobiles contenus dans les impulsions et permet de les rendre moins sensibles par rapport à l'écho fixe. Un tel traitement complique cependant la mise en oeuvre du procédé selon l'invention.

Une autre variante de l'invention peut consister à ajouter un asservissement en phase et en amplitude à l'intérieur de chaque impulsion en fonction d'une impulsion de référence. Cela peut permettre de supprimer des dérives d'amplitude et de phase provoquées par des changements de température ou des dérives de réglage par exemple.

Enfin, si la première impulsion ne peut être utilisée dans les circuits de réception et de traitement du radar, une impulsion supplémentaire peut être ajoutée pour jouer le rôle de la première impulsion en étant retranchée aux impulsions suivantes du train.

## Revendications

1. Procédé d'élimination d'échos fixes contenus dans un train (1) d'impulsions d'échos reçus en réponse aux impulsions émises par un radar cohérent de période de répétition donnée soustrayant une impulsion antérieure d'écho à chaque impulsion d'échos du train, caractérisé en ce qu'il consiste dans une première étape à mémoriser la première impulsion (2) du train (1) d'échos puis dans une deuxième étape à soustraire la première impulsion (2) aux autres impulsions du train (1) d'échos.

2. Procédé selon la revendication 1, caractérisé en ce que l'amplitude et la phase de la première impulsion (2) sont mémorisées, la première impulsion (2) étant reconstituée à partir de son amplitude et de sa phase mémorisées pour être soustraite aux autres impulsions du train (1) d'échos.

3. Procédé selon l'une quelconque des revendications 1 ou 2, caractérisé en ce que l'amplitude et la phase de la première impulsion (2) d'échos sont échantillonnées.

4. Procédé selon la revendication 3, caractérisé en ce que chaque échantillon de la première impulsion (2) d'échos est soustrait aux autres impulsions du train (1) d'échos à des instants successifs séparés de la période de répétition (T) des impulsions à l'intérieur du train (1) d'échos, le premier instant étant l'instant d'échantillonnage de l'échantillon à l'intérieur de la première impulsion (2) augmenté de la période de répétition (T).

5. Dispositif pour la mise en oeuvre du procédé selon l'une quelconque des revendications précédentes dans un radar cohérent à impulsions de période de répétition donnée, caractérisé en ce qu'il comprend :
- des moyens de mémorisation (42, 44, 45, 48, 49, 50) de la première impulsion (2) d'écho dudit train couplés à la voie de réception (41) du radar ;
- des moyens de soustraction (47, 46, 51, 43) de la première impulsion (2) d'écho aux autres impulsions du train (1) d'échos couplés aux moyens de mémorisation et à la voie de réception ;
- des moyens de séquencement et de synchronisation (52, 53, 54) couplés aux moyens de mémorisation.

6. Dispositif selon la revendication 6, caractérisé en ce qu'il comprend :
- un additionneur (43) dont l'entrée positive est reliée à la voie de réception (41) du radar ;
- un détecteur (42) d'amplitude et de phase dont l'entrée est reliée à la voie de réception (41) ;
- un convertisseur analogique-numérique (44) dont l'entrée analogique est reliée à la sortie de détection d'amplitude du détecteur (42) ;
- une première mémoire numérique (45) dont une entrée est reliée à la sortie du convertisseur analogique-numérique (44) ;
- un atténuateur programmable (46) dont l'entrée de commande est reliée à la sortie de la première mémoire numérique (45) ;
- un circuit de discrimination (48) d'amplitude et de phase dont une entrée est reliée à la sortie de détection de phase du détecteur (42) ;
- un circuit de calcul de phase (49) dont deux entrées sont reliées aux sorties du circuit de discrimination (48) ;
- une deuxième mémoire numérique (50) dont une entrée est reliée à la sortie du circuit de calcul de phase (49) ;
- un déphaseur programmable (51) dont l'entrée de commande est reliée à la sortie de la deuxième mémoire numérique (50), son entrée principale étant reliée à la sortie de l'atténuateur (46) et sa sortie étant reliée à l'entrée négative de l'additionneur (43) ;
- un oscillateur local (47) dont la sortie est reliée à l'entrée principale de l'atténuateur (46), à l'entrée de référence du circuit de discrimination (48) et à l'entrée d'un diviseur de fréquence (54) ;
- un circuit de séquencement (52) dont une entrée est reliée à la sortie du diviseur de fréquence (54) et l'autre entrée à la sortie d'un circuit de synchronisation (53), la sortie du circuit de séquencement (52) étant reliée aux entrées de commande du convertisseur analogique-numérique (44), de la première mémoire (45), du circuit de calcul de phase (49) et de la deuxième mémoire (50).

7. Dispositif selon l'une quelconque des revendications 5 ou 6, caractérisé en ce que les mémoires numériques (45, 50) sont des lignes à retard numériques.

8. Dispositif selon l'une quelconque des revendications 5 à 7, caractérisé en ce que le détecteur (42) est un détecteur amplificateur logarithmique.

9. Dispositif selon l'une quelconque des revendications 5 à 8, caractérisé en ce que le circuit de discrimination (48) est constitué d'un mélangeur suivi de deux déphaseurs décalés en phase de 90°.

## Patentansprüche

1. Verfahren zum Beseitigen von in einem Impulszug (1) enthaltenen festen Echos, die als Antwort auf Impulse empfangen werden, die von einem kohärenten Radar mit gegebener Wiederholungsperiode ausgesendet werden, das von jedem Echoimpuls des Zugs einen früheren Echoimpuls subtrahiert, dadurch gekennzeichnet, daß es aus einem ersten Schritt, in dem der erste Impuls (2) des Echozugs (1) gespeichert wird, und dann aus einem zweiten Schritt besteht, in dem der erste Impuls (2) von den anderen Impulsen des Echozugs (1) subtrahiert wird.

2. Verfahren nach Anspruch 1, dadurch gekennzeichnet, daß die Amplitude und die Phase des ersten Impulses (2) gespeichert werden, wobei der erste Impuls (2) anhand seiner Amplitude und anhand seiner Phase, die gespeichert sind, wiederhergestellt wird, um von den anderen Impulsen des Echozugs (1) subtrahiert zu werden.

3. Verfahren nach irgendeinem der Ansprüche 1 oder 2, dadurch gekennzeichnet, daß die Amplitude und die Phase des ersten Echoimpulses (2) abgetastet werden.

4. Verfahren nach Anspruch 3, dadurch gekennzeichnet, daß jeder Abtastwert des ersten Echoimpulses (2) von den anderen Impulsen des Echozugs (1) zu aufeinanderfolgenden Zeitpunkten subtrahiert wird, welche durch die Wiederholungsperiode (T) der Impulse innerhalb des Echozugs (1) getrennt sind, wobei der erste Zeitpunkt der Zeitpunkt der Abtastung des Abtastwerts innerhalb des ersten Impulses (2), vergrößert um die Wiederholungsperiode (T), ist.

5. Vorrichtung für die Ausführung des Verfahrens nach irgendeinem der vorangehenden Ansprüche in einem kohärenten Radar mit Impulsen mit gegebener Wiederholungsperiode, dadurch gekennzeichnet, daß sie enthält:
- Speichermittel (42, 44, 45, 48, 49, 50) für den ersten Echoimpuls (2) des Zugs, die an den Empfangskanal (41) des Radars angeschlossen sind;
- Subtraktionsmittel (47, 46, 51, 43), die den ersten Echoimpuls (2) von den anderen Impulsen des Echozugs (1) subtrahieren und die an die Speichermittel und an den Empfangskanal angeschlossen sind;
- Ablaufsteuerungs- und Synchronisationsmittel (52, 53, 54), die an die Speichermittel angeschlossen sind.

6. Vorrichtung nach Anspruch 6, dadurch gekennzeichnet, daß sie enthält:
- einen Addierer (43), dessen positiver Eingang mit dem Empfangskanal (41) des Radars verbunden ist;
- einen Detektor (42) für die Amplitude und die Phase, dessen Eingang mit dem Empfangskanal (41) verbunden ist;
- einen Analog/Digital-Umsetzer (44), dessen analoger Eingang mit dem Amplitudenerfassungsausgang des Detektors (42) verbunden ist;
- einen ersten digitalen Speicher (45), wovon ein Eingang mit dem Ausgang des Analog/Digital-Umsetzers (44) verbunden ist;
- eine programmierbare Dämpfungseinrichtung (46), deren Steuereingang mit dem Ausgang des ersten digitalen Speichers (45) verbunden ist;
- eine Diskriminatorschaltung (48) für die Amplitude und die Phase, wovon ein Eingang mit dem Phasenerfassungsausgang des Detektors (42) verbunden ist;
- eine Phasenberechnungsschaltung (49), wovon zwei Eingänge mit den Ausgängen der Diskriminatorschaltung (48) verbunden sind;
- einen zweiten digitalen Speicher (50), wovon ein Eingang mit dem Ausgang der Phasenberechnungsschaltung (49) verbunden ist;
- einen programmierbaren Phasenschieber (51), dessen Steuereingang mit dem Ausgang des zweiten digitalen Speichers (50) verbunden ist, dessen Haupteingang mit dem Ausgang der Dämpfungseinrichtung (46) verbunden ist und dessen Ausgang mit dem negativen Eingang des Addierers (43) verbunden ist;
- einen Überlagerungsoszillator (47), dessen Ausgang mit dem Haupteingang der Dämpfungseinrichtung (46), mit dem Referenzeingang der Diskriminatorschaltung (48) sowie mit dem Eingang eines Frequenzteilers (54) verbunden ist;
eine Ablaufsteuerschaltung (52), wovon ein Eingang mit dem Ausgang des Frequenzteilers (54) und der andere Eingang mit dem Ausgang einer Synchronisationsschaltung (53) verbunden ist, wobei der Ausgang der Ablaufsteuerschaltung (52) mit den Steuereingängen des Analog/Digital-Umsetzers (44), des ersten Speichers (45), der Phasenberechnungsschaltung (49) bzw. des zweiten Speichers (50) verbunden ist.

7. Vorrichtung nach einem der Ansprüche 5 oder 6, dadurch gekennzeichnet, daß die digitalen Speicher (45, 50) digitale Verzögerungsleitungen sind.

8. Vorrichtung nach einem der Ansprüche 5 bis 7, dadurch gekennzeichnet, daß der Detektor (42) ein logarithmischer Verstärkungsdetektor ist.

9. Vorrichtung nach einem der Ansprüche 5 bis 8, dadurch gekennzeichnet, daß die Diskriminatorschaltung (48) von einem Mischer gebildet ist, dem zwei um 90° phasenversetzte Phasenschieber nachgeschaltet sind.

## Claims

1. Method for the elimination of fixed echoes contained in a pulse train (1) of echoes received in response to the pulses emitted by a coherent radar with given repetition period subtracting an earlier echo pulse from each pulse of the train, characterized in that the said method consists, in a first step, in memorizing the first pulse (2) of the echo train (1) and then, in a second step, in subtracting the first pulse (2) from the other pulses of the echo train (1).

2. Method according to Claim 1, characterized in that the amplitude and phase of the first pulse (2) are memorized, the first pulse (2) being reconstituted from its memorized amplitude and phase so as to be subtracted from the other pulses of the echo train (1).

3. Method according to either one of Claims 1 or 2, characterized in that the amplitude and phase of the first echo pulse (2) are sampled.

4. Method according to Claim 3, characterized in that each sample of the first echo pulse (2) is subtracted from the other pulses of the echo train (1) at separate successive instants of the repetition period (T) of the pulses inside the echo train (1), the first instant being the instant of sampling of the sample inside the first pulse (2) plus the repetition period (T).

5. Device for the implementation of the method according to any one of the above claims in a coherent pulse radar with given repetition period, characterized in that it comprises:
- means (42, 44, 45, 48, 49, 50) to memorize the first echo pulse (2) of the said train coupled to the reception channel (41) of the radar;
- means (47, 46, 51, 43) to subtract the first echo pulse (2) from the other pulses of the echo train (1), coupled to the memorizing means and to the reception channel;
- sequencing and synchronization means (52, 53, 54) coupled to the memorizing means.

6. Device according to Claim 6, characterized in that it comprises:
- an adder (43), the positive input of which is connected to the reception channel (41) of the radar;
- an amplitude and phase detector (42), the input of which is connected to the reception channel (41);
- an analog-digital converter (44), the analog input of which is connected to the amplitude detection output of the detector (42);
- a first digital memory (45), an input of which is connected to the output of the analog-digital converter (44),
- a programmable attenuator (46), the control input of which is connected to the output of the first digital memory (45);
- an amplitude and phase discrimination circuit (48), an input of which is connected to the phase detection output of the detector (42);
- a phase computation circuit (49), two inputs of which are connected to the outputs of the discrimination circuit (48);
- a second digital memory (50), an input of which is connected to the output of the phase computation circuit (49);
- a programmable phase-shifter (51), the control input of which is connected to the output of the second digital memory (50), its main input being connected to the output of the attenuator (46) and its output being connected to the negative input of the adder (43);
- a local oscillator (47), the output of which is connected to the main input of the attenuator (46), to the reference input of the discrimination circuit (48) and to the input of a frequency divider (54);
- a sequencing circuit (52), one input of which is connected to the output of the frequency divider (54) and the other input of which is connected to the output of a synchronization circuit (53), the output of the sequencing circuit (52) being connected to the control inputs of the analog-digital converter (44), of the first memory (45), of the phase computation circuit (49) and of the second memory (50).

7. Device according to Claims 5 or 6, characterized in that the digital memories (45,50) are digital delay lines.

8. Device according to any one of Claims 5 to 7, characterized in that the detector (42) is a logarithmic amplifier detector.

9. Device according to any one of Claims 5 to 8, characterized in that the discrimination circuit (48) is constituted by a mixer followed by two phase-shifters, phase-shifted by 90°.
